# EUROPEAN PATENT APPLICATION

(11) **EP 3 179 039 A1**
(43) Date of publication of application: **14.06.2017**
(21) Application number: 16198589.0
(22) Date of filing: 14.11.2016
(51) Int. Cl.: F01D 5/18, F01D 9/06, F23R 3/00

(54) **COMPONENT FOR A GAS TURBINE ENGINE**

(30) Priority: 11.12.2015 GB 201521862
(71) Applicant: Rolls-Royce plc, London SW1E 6AT (GB)
(72) Inventor: Mottram, Martin, Derby, Derbyshire DE24 8BJ (GB)
(74) Representative: Rolls-Royce plc

(57) **Abstract**

An aerofoil (36) for a gas turbine engine (10) comprising a pressure wall (48) and a suction wall (49) and defining leading and trailing edges (43, 45), the walls define a passage (61) into which is supplied a cooling fluid, an array of cooling holes (60) is provided through at least one of the walls (48, 49) to allow the cooling fluid to flow from an interior surface (55) to an exterior surface (56). The array of holes (60) comprise two groups (62, 64), the holes of each group are angled to intersect the holes of the other group and are characterised in that the holes of at least one of the groups (62, 64) comprises two or more holes at different angles to one another to vary the porosity of the wall to account for otherwise varying wall temperatures. This arrangement also allows either less coolant mass flow to maintain a constant metal temperature, or a lower metal temperature for a given coolant mass flow.

## Description

The present invention relates to an arrangement of cooling holes in component of a gas turbine engine. For example, the component is an aerofoil.

Gas turbine blades and vanes, particularly those in the hot turbines, may require cooling and it is well known to provide a coolant flow to an internal passage of the component. Holes are provided through walls of the component so that the coolant removes heat from the wall and may form a coolant film over an external surface of the component.

US5062768 discloses a turbine blade having a wall defining multiple angled cooling holes that intersect and have a single exit. Where the holes intersect there is a constriction. This arrangement is characterised in that the cross-sectional area of flow for the coolant is greater at the exit than at the intersection, thereby avoiding blockages at the exit.

US5370499 discloses a turbine aerofoil wall having a mesh cooling hole arrangement which includes first and second pluralities of cooling holes between internal and external surfaces. The cooling holes of each plurality extend generally parallel to one another and intersect leaving internal nodes. Coolant jets interact with one another at these intersections and cause a restriction of the flow, thereby producing a pressure drop. The area of the flow inlets is substantially less than the area of the flow outlets.

US8240994 discloses a blade having an array of cooling holes passing through an external wall of the blade. The array comprises two groups of holes. The holes of each group are angled to intersect the holes of the other group and the within at least one of the two groups, two or more holes are arranged at different angles to one another to vary the porosity of the wall to account for otherwise varying wall temperatures.

Although these and other conventional cooling arrangements are adequate to cool aerofoils, there is a desire to further reduce the amount of coolant required thereby minimising parasitic losses and improving the efficiency of the gas turbine engine. There is also a desire to tailor the amount of cooling in certain regions of the aerofoil that may be subject to a varying temperature profile. Whilst internal convective cooling is important, in some applications it is insufficient on its own. Cooling flow rate may be dictated by the requirement to provide a cooling at a surface.

Therefore it is an object of the present invention to provide an aerofoil or other component with a more efficient cooling arrangement.

In accordance with the present invention there is provided a component for a gas turbine engine comprising a wall which bounds a chamber into which, in use, a cooling fluid is supplied, an array of cooling holes extending through the wall from a chamber facing surface to an oppositely facing surface, each comprising an inlet at the chamber facing surface, an outlet at the oppositely facing surface and a passage joining the inlet to the outlet, the configuration permitting the flow of cooling fluid from the inlet to the outlet, the array comprising two groups of holes, the axes of holes of a first of the groups being angled with respect to axes of holes of the second of the groups and arranged to intersect the holes of the second group, all intersections occurring upstream of the outlets and wherein a plurality of the passages in the holes of the array are radially divergent such that the outlet has a larger area than the inlet.

The chamber facing surface and oppositely facing surface may be parallel or one may be inclined with respect to the other resulting in a wall of non-uniform thickness.

The component may comprise an aerofoil for a gas turbine engine, the aerofoil comprising a pressure wall and a suction wall together defining leading and trailing edges of the aerofoil, the chamber being enclosed by the pressure and suction walls. In other embodiments (without limitation), the component may be a hub or shroud of a turbine stator or rotor, a blade track liner, or a combustor tile. It will be appreciated the holes in one group may be angled with respect to the holes in the other group in either or both of two orthogonal planes. It will be appreciated that by angling the holes within a single plane, single rows of outlet and inlet holes can result. Where the axes are angled in two orthogonal planes, a single row of inlets may result in a multiple rows of outlets.

In the present context porosity refers to the volume of void space created by the holes in the wall versus the volume of solid material of the wall. In an option, in one or both groups, axes of all holes in the group are arranged at different angles to a common plane (such as a surface of the wall) whereby to render the porosity of the wall variable. Porosity will be reduced at points of intersection between the hole passages. Also, porosity will increase with divergence.

The angles to which the holes are respectively inclined can be selected to position intersections in regions where the cooling requirements are at their smallest.

The axes of one or more consecutively adjacent holes within a group are optionally inclined at increasingly steep angles to one another.

In some embodiments, each hole in the first group of the array intersects a hole in the second group of the array only once. In alternative embodiments some holes in the first group of the array intersect with some holes in the second group of the array two or more times.

Optionally all holes are radially divergent. Radially divergent holes may diverge by the same amount or different amounts. In one option each group of the array includes radially divergent holes and the radially divergent holes within a group diverge by the same amount and the radially divergent holes of one group diverge to a lesser or greater extent than the other group.

Holes in one group may be of a larger or smaller cross-sectional area than those of the other group.

In some embodiments, the divergence is such that the outlet of a hole has an area which is from about 1.5 to 3 times the area of the inlet of the hole. For example the outlet area is nominally about 2.2 times the area of the inlet of a radially divergent hole.

In some embodiments, some or all of the radially divergent holes have a consistent angle of divergence of from about 6° to about 10°. More preferably, the angle of divergence is about 8°. Optionally, some or all of the radially divergent holes have a changing angle of divergence, the angle increasing in a direction from the interior wall surface to the exterior wall surface. In some embodiments some or all of the radially divergent holes are non-divergent in a region extending from the interior wall surface to a mid-portion of the hole and divergent in a region extending from a mid-portion of the hole to the outer wall surface of the hole. In alternative embodiments, the radially divergent holes have curved walls in cross-section where the rate of radial divergence gradually increases from an inlet to an outlet end of the hole.

Radial divergence in a hole may commence at a position of from about 33% to about 66% of the distance from the inlet to the outlet. For example, radial divergence may commence at a nominal position of about 50% of the distance from the inlet to the outlet.

The arrangement and configuration of the first and second groups may be such as to result in radially divergent sections of the holes overlapping in a region just upstream of the outlet thus forming a single passage just below the exterior surface of the wall. In some embodiments, the radially divergent sections of two intersecting holes may overlap. In some embodiments, outlet overlap may occur between the divergent sections of two adjacent intersecting pairs of holes, the divergent section of a hole from the first group in the pair overlapping with the divergent section of a hole from the second group in the adjacent pair. Optionally, both forms of overlap may occur resulting in a single passage just upstream of the outer surface.

Where the component is a blade or a vane of a gas turbine engine, the holes may be arranged adjacent a trailing edge of the blade or vane. In alternate embodiments, the holes may be located in other regions of the aerofoil.

In some embodiments, it may be desirable to avoid intersection of holes as the outlets break out of the wall. For film cooling purposes separation of outlets may be preferred. It will be within the capability of the skilled addressee to identify relative angles between the axes of holes which ensure that the outlets do not coincide at the surface of the wall.

It will be understood that greater angles between the axes of the two groups of holes will result in a greater flow angle difference between the film flow at the outlet side and the free stream entering the inlets. This may reduce film effectiveness. Accordingly, an optimum angle might be identified for some applications. For example, the optimum angle may be 40 degrees or less, optionally not less than about 15-20 degrees.

Components of the invention may be manufactured by any of a number of known manufacturing methods for example (without limitation) electrode discharge machining, electro-chemical machining, conventional drilling, or laser drilling.

The inventors envisage the following benefits can be achieved in applications of the invention.
- An acceptable level of cooling can be achieved with a reduced cooling flow compared to prior art arrangements. Since coolant is typically compressor air which bypasses the combustor, more compressed air can be directed to the combustor and the efficiency of the engine thereby improved. Improved film cooling effectiveness results from the divergent holes (which serve as diffusing film cooling holes) and in addition high internal convective cooling is achieved due to the increased internal area created by the intersecting holes.
- Service life of the component can be improved, since the arrangement will be robust against cooling hole blockage from debris.
- Flow disturbance at the intersections will reset the boundary layer, allowing higher diffusion rates without separation.

The present invention will be more fully described by way of example with reference to the accompanying drawings in which:
Figure 1 is a schematic section of a ducted fan gas turbine engine;
Figure 2 is a view of a turbine blade;
Figure 3a is a section through a wall of the turbine blade showing a first embodiment of an array of cooling holes in accordance with the present invention;
Figure 3b shows an enlarged section of the embodiment of Figure 3 in greater detail;
Figure 4a is a section through a wall of the turbine blade showing second embodiment of an array of cooling holes in accordance with the present invention;
Figure 4b shows an enlarged section of the embodiment of Figure 3 in greater detail;
Figure 5 shows in schematic an arrangement of holes in accordance with an embodiment of the invention.

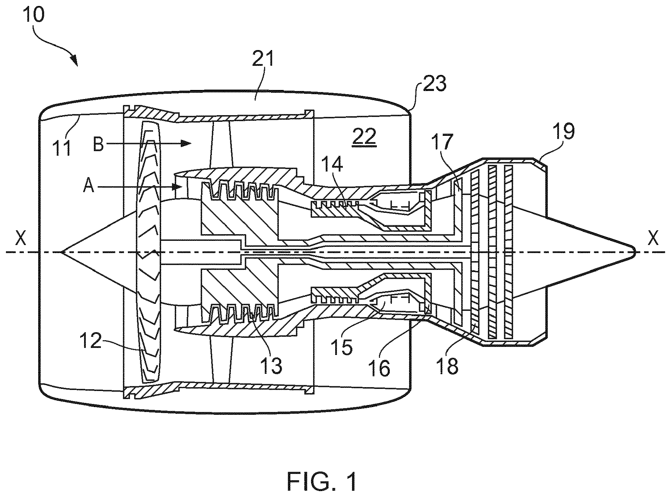

Referring to Figure 1, a ducted fan gas turbine engine generally indicated at 10 has a principal and rotational axis XX. The engine 10 comprises, in axial flow series, an air intake 11, a propulsive fan 12, an intermediate pressure compressor 13, a high-pressure compressor 14, combustion equipment 15, a high-pressure turbine 16, and intermediate pressure turbine 17, a low-pressure turbine 18 and a core exhaust nozzle 19. A nacelle 21 generally surrounds the engine 10 and comprises the intake 11, two generally C-shaped ducts 20, which define bypass ducts 22, and an exhaust nozzle 23.

The gas turbine engine 10 works in the conventional manner so that air entering the intake 11 is accelerated by the fan 12 to produce two air flows: a first airflow A into the intermediate pressure compressor 13 and a second airflow B which passes through the bypass ducts 22 to provide propulsive thrust. The intermediate pressure compressor 13 compresses the airflow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines 16, 17, 18 respectively drive the high and intermediate pressure compressors 14, 13 and the fan 12 by suitable interconnecting shafts.

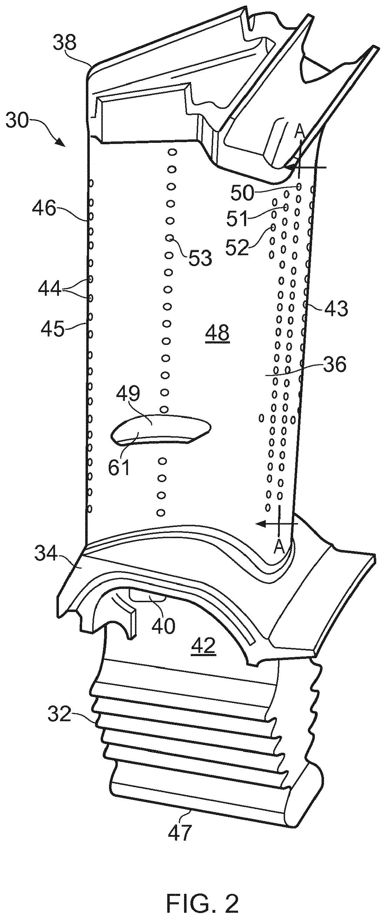

Referring now to Figure 2, a turbine blade 30, one of an annular array of blades of the high-pressure turbine 16 comprises a root portion 32, having a so-called "fir-tree" sectional shape which locates in a correspondingly shaped slot in the periphery of a turbine rotor disc (not shown); a pressure side wall 48 and a suction side wall 49 and defining therebetween leading and trailing edges 43, 45; a radially inner platform 34, which abuts the platforms of neighbouring blades to help define a gas passage inner wall for the turbine; an aerofoil 36, which extracts power from the gas flow past it; and an outer shroud portion 38 which again cooperates with its neighbours to help define the outer wall of the turbine's gas passage. Although described in relation to integrally shrouded blades, the invention is of course equally applicable to unshrouded blades as well as vanes.

The interior of the aerofoil 36 can contain a chordwise succession of substantially mutually parallel cooling air passages 61 which passages extend spanwise of the aerofoil. One or more of the passages are connected to a cooling air entry port 40 provided in the side face of an upper root shank portion 42 just below the underside of inner platform 34. This receives low pressure cooling air, which cools the aerofoil 36 by taking heat from the internal surface of the aerofoil as it flows through the internal passage and out through holes (not shown) in the shroud 38 and also through the spanwise row of closely spaced small holes 44 in the trailing edge 46 of the aerofoil. The interior of the aerofoil 36 can also contain in combination with these passages a radial succession of substantially mutually parallel chordwise passages.

Others of the internal passages are connected to another cooling air entry port (not shown) located at the base 47 of the "fir-tree" root portion 32, where high pressure cooling air enters and cools the internal surfaces of the aerofoil 36 by its circulation through the passages and eventual exit through holes (not shown) in the shroud 38. It is also utilised to film-cool the external surface of the pressure wall 48 of the aerofoil 36 by means of spanwise extending rows of film cooling holes 50 to 53.

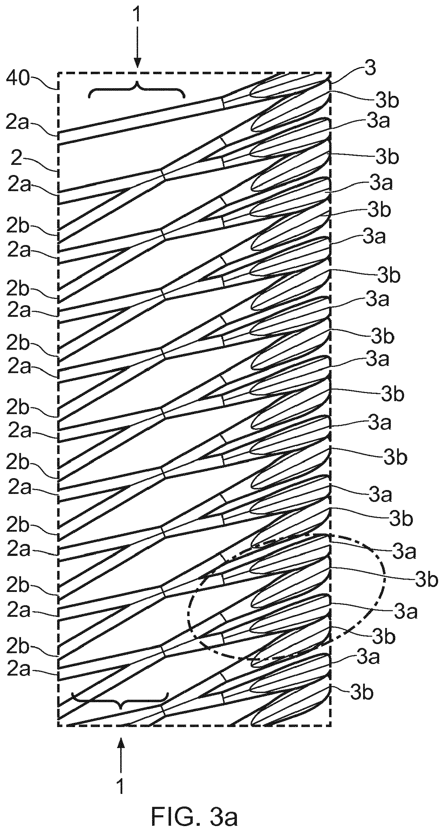

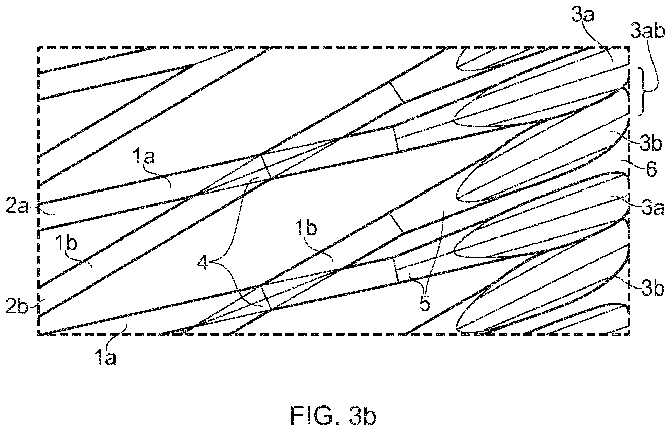

Referring now to Figures 3a and 3b, the pressure wall 40 comprises an array of cooling holes 1, in accordance with the present invention, defined by the wall 40 and extending between interior (chamber side) and exterior surfaces 2, 3 to allow the cooling fluid to flow therebetween. The array of holes 1 comprises a first group 1a and a second group 1b wherein the holes of each group are angled to intersect the holes of the other group at an intersection 4.

Each hole 1 a, 1 b has an inlet 2a, 2b and an outlet 3a, 3b. From the inlet end 2a, 2b extending towards the outlet end 3a, 3b, the holes have a substantially uniform cross section up to and just beyond the intersection 4 and then commence radial divergence through a section 5 terminating at the outlet 3a, 3b. For any given intersecting pair of holes 1 a, 1 b, the outlets 3a, 3b emerge at the exterior surface 3 separated by a section of wall 6. However, outlets 3a, 3b from adjacent pairs may intersect to provide a common, larger outlet 3ab.

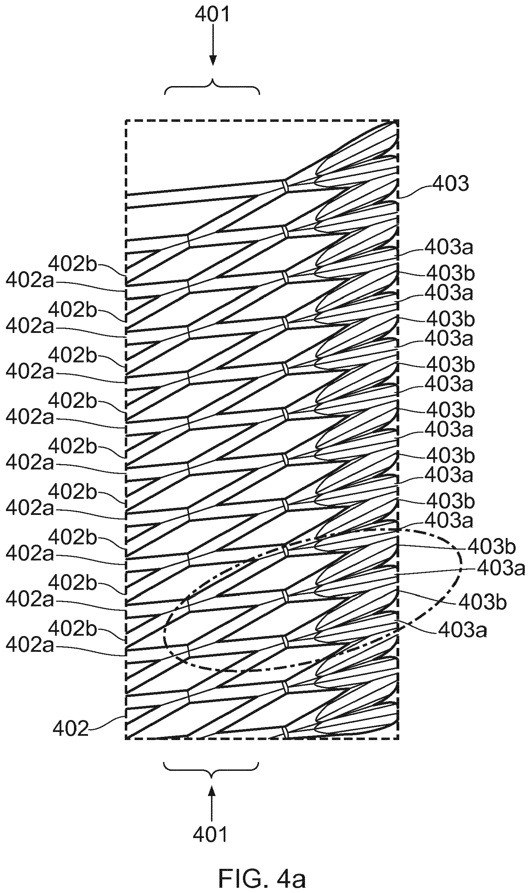

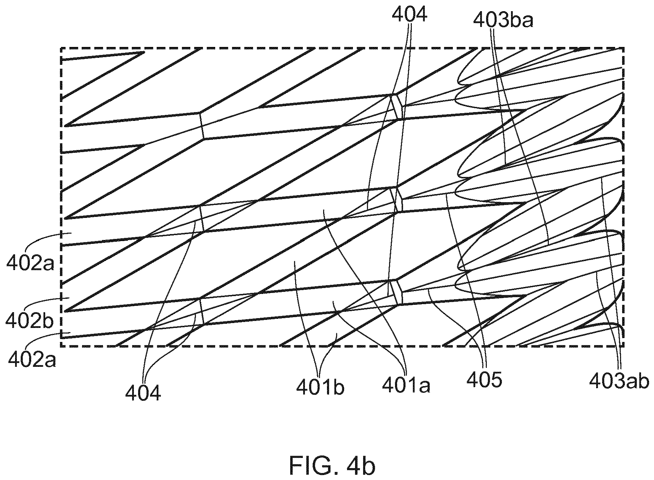

Referring now to Figures 4a and 4b, the pressure wall comprises an array of cooling holes 401, in accordance with the present invention, defined by the wall extending between interior and exterior surfaces 402, 403 to allow the cooling fluid to flow therebetween. The array of holes 401 comprises a first group 401 a and a second group 401 b wherein the holes of each group are angled to intersect the holes of the other group at two intersections 404 and 404'.

Each hole 401 a, 401 b has an inlet 402a, 402b and an outlet 403a, 403b. From the inlet end 402a, 402b extending towards the outlet end 403a, 403b, the holes have a substantially uniform cross section up to and beyond the intersections 404, 404' and then commence radial divergence through a section 405 terminating at the outlet 403a, 403b. The second intersection 404' sits adjacent the radially divergent section 405.

For any given intersecting pair of holes 401 a, 401 b, the outlets 403a, 403b emerge at the exterior surface 403. In this embodiment, the configuration is such that outlets 403a, 403b from adjacent pairs overlap to provide a common, larger outlet 403ab, 403ba. In addition, the outlets for the two intersecting holes within a pair also overlap upstream of the aforementioned overlap providing a convoluted passage just upstream of where the outlets break through at the exterior surface 403.

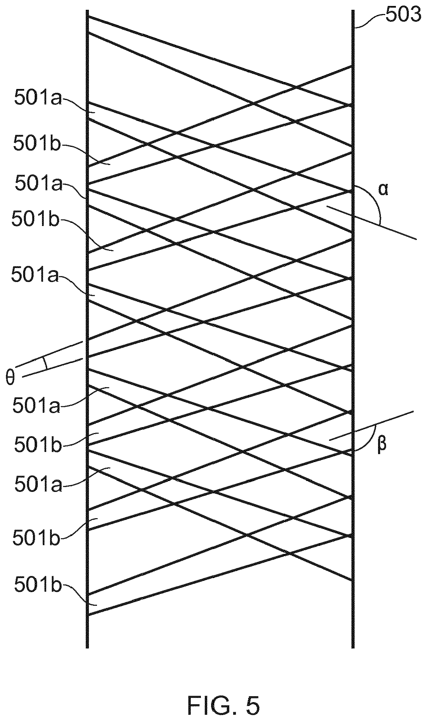

Figure 5 shows in schematic an arrangement of holes in accordance with an embodiment of the invention. A first group of holes 501 a has an axis arranged at an angle α to an exterior wall surface 503. A second group 501 b has an axis arranged at an angle β to the exterior wall surface 503. The angle of divergence of a hole from an inlet to an outlet direction is Θ. In the shown schematic, the angle α is consistent for all holes in group 501 a and the angle β is consistent for all holes in group 501 b, though this need not be the case. Angles α and/or β may vary for holes within a group. Each of angles α and β may cover a range, for example α and/or β may gradually increase in increments from each hole in the group to the adjacent hole in the group. Alternatively, such increases may occur over multiple holes in a group, for example α and/or β increasing every third sequential hole in the group. These arrangements can result in some regions within the wall having greater porosity than others. This results in a greater flow of coolant through these regions and a greater surface area over which the coolant flows, thus, more porous regions can be cooled to a greater extent than less porous regions. Such embodiments are particularly suitable where a blade's aerofoil is subject to a varying temperature profile over its radial height. Areas exposed to greater temperatures can be made more porous to provide increased cooling. Alternatively, such arrangements have application where the temperature of the coolant changes such that as the coolant increases in temperature, there is a corresponding increase in porosity to compensate for the lower temperature differential between the coolant and surrounding wall. It will be within the capabilities of the skilled addressee to identify regions which might benefit from increased cooling and to provide appropriate increased porosity using the teaching of the invention herein without the need for additional inventive thought.

Various modifications may be made without departing from the scope of the present invention. For example, two or more adjacent holes may be parallel and angled differently than the next two or more parallel holes; consecutive holes may be inclined at increasingly steep angles relative to one another i.e. the holes are not equally incremented in their angles.

This arrangement is expected to provide a significant wall temperature reduction for the same mass flow of coolant using conventional non-intersecting cooling hole arrangements.

## Claims

1. A component for a gas turbine engine comprising a wall (40) which bounds a chamber into which, in use, a cooling fluid is supplied, an array of cooling holes (1) extending through the wall from a chamber facing surface (2) to an oppositely facing surface (3), each comprising an inlet (2a; 2b) at the chamber facing surface, an outlet (3a;3b) at the oppositely facing surface and a passage joining the inlet to the outlet, the configuration permitting the flow of cooling fluid from the inlet (2a; 2b) to the outlet (3a; 3b), the array comprising two groups of holes (1a, 1b), the axes of holes of a first of the groups (1a) being angled with respect to axes of holes of the second of the groups (1 b) and arranged to intersect the axes of holes of the second group (1 b), all intersections (4) occurring upstream of the outlets (3a;3b) and wherein a plurality of the passages in the holes (1) of the array are radially divergent such that the outlet (3a; 3b) has a larger area than the inlet (2a; 2b).

2. A component as claimed in claim 1 wherein the chamber facing surface (2) and oppositely facing surface (3) are in arranged in parallel.

3. A component as claimed in claim 1 or claim 2 wherein the component is an aerofoil (30) for a gas turbine engine, the aerofoil comprising a pressure wall (48) and a suction wall (49) together defining leading and trailing edges (43, 45) of the aerofoil, the chamber being enclosed by the pressure and suction walls (48, 49).

4. A component as claimed in claim 1 or claim 2 wherein the component is selected from; a hub or shroud of a turbine stator or rotor, a blade track liner, or a combustor tile.

5. A component as claimed in any preceding claim wherein the holes in one group (1 a) are angled with respect to the holes in the other group (1 b) in either or both of two orthogonal planes.

6. A component as claimed in any preceding claim wherein the axes of two or more consecutively adjacent holes within a group are inclined at increasingly steep angles to one another.

7. A component as claimed in any preceding claim wherein each hole in the first group (1 a) of the array (1) intersects a hole in the second group (1b) of the array only once.

8. A component as claimed in any of claims 1 to 6 wherein one or more holes in the first group (1 a) of the array intersect with a hole in the second group (1 b) of the array two or more times.

9. A component as claimed in any preceding claim wherein all holes (1 a, 1 b) are radially divergent.

10. A component as claimed in any preceding claim wherein the radially divergent holes diverge by the same amount.

11. A component as claimed in any of claims 1 to 9 wherein the radially divergent holes within a group diverge by the same amount and the radially divergent holes of one group diverge to a lesser or greater extent than the other group.

12. A component as claimed in any preceding claim wherein the divergence of a radially divergent hole is such that the outlet (3a; 3b) of the hole has an area which is from 1.5 to 3 times the area of the inlet (2a; 2b) of the hole.

13. A component as claimed in claim 12 wherein the outlet area of a radially divergent hole is nominally 2.2 times the area of the inlet of the hole.

14. A component as claimed in any preceding claim wherein some or all of the radially divergent holes have a consistent angle of divergence of from 6° to 10°.

15. A component as claimed in claim 14 wherein the angle of divergence is nominally 8°.

16. A component as claimed in any preceding claim wherein some or all of the radially divergent holes have a changing angle of divergence (Θ), the angle of divergence increasing in a direction from the interior wall surface (2) to the exterior wall surface (3).

17. A component as claimed in claim 16 wherein some or all of the radially divergent holes are non-divergent in a region extending from the interior wall surface (2) to a mid-portion of the hole (1) and divergent in a region extending from a mid-portion of the hole (1) to the exterior wall surface (3) of the hole.

18. A component as claimed in claim 17 wherein radial divergence commences at a position in the range from 33% to 66% of the distance from the inlet (2a; 2b)to the outlet (3a;3b).

19. A component as claimed in claim 17 wherein radial divergence commences at a nominal position of 50% of the distance from the inlet (2a; 2b) to the outlet (3a;3b).

20. A component as claimed in any preceding claim wherein radially divergent sections of holes in the array overlap in a region just upstream of the outlet thus forming a single passage just below the exterior surface (3) of the wall.

21. A component as claimed in claim 20 wherein, the radially divergent sections of intersecting pairs of holes overlap.

22. A component as claimed in claim 20 or 21 wherein the radially divergent sections of adjacent intersecting pairs of holes overlap, the divergent section of a hole from the first group in the pair overlapping with the divergent section of a hole from the second group in the adjacent pair.
